# EUROPEAN PATENT SPECIFICATION

(11) **EP 4 053 409 B1**
(45) Date of publication and mention of the grant of the patent: **08.01.2025**
(21) Application number: 21160763.5
(22) Date of filing: 04.03.2021
(51) Int. Cl.: F04B 39/08, F04B 39/10, F04B 45/047, F04B 49/03

(54) **INTEGRATED PUMP VALVE UNIT**
INTEGRIERTE PUMPENVENTILEINHEIT
UNITÉ DE SOUPAPE DE POMPE INTÉGRÉE

(43) Date of publication of application: 07.09.2022
(73) Proprietor: FICO CABLES LDA, 4470-263 Maia (PT)
(72) Inventor: DE CASTRO FARIA, Manuel Antonio, 4470-263 Vermoim-Maia (PT); DA SILVA LOPES, Pedro Joao, 4470-263 Vermoim-Maia (PT); GONCALVES SILVA, David Manuel, 4470-263 Vermoim-Maia (PT)
(74) Representative: Bardehle Pagenberg Partnerschaft mbB Patentanwälte Rechtsanwälte

(56) References cited:
- WO-A2-01/00132
- WO-A2-01/00132
- CN-A- 110 805 547
- US-A1- 2013 000 759
- US-A1- 2019 101 220

## Description

### 1. Technical field

The invention relates to an integrated pump valve unit, particularly for providing compressed air to an air bladder of an automotive comfort system within an automotive seat. Such comfort systems are used for shaping the seat cushion or backrest of an automotive seat according to passengers needs or for providing a massage function.

### 2. Prior art

Automotive comfort systems with air bladders for shaping the seat cushion or the backrest of an automotive seat are known. Presently such comfort systems comprise motor actuated air pumps that supply compressed air to fill air bladders with the desired amount of air. Further, the filling and release of air of such air bladders is usually controlled by solenoid air valves.

Further, the document DE 11 2007 003 767 B4 discloses generally a pump on a piezoelectric basis that is used for filling an air bladder within a headrest of a vehicle seat.

Apart from solenoid valves, it was also known in the prior art to use piezoelectric actuated valves for controlling the filling and release of air of air bladders. For example, the document EP 1374 739 A2 discloses a contour-adjustable seat having air or gas-filled cushions that are controlled by piezo valves. The document WO 2001 000 132 A2 likewise discloses a vehicle seat with a multitude of air chambers that are controlled by piezoelectric valves.

Document CN 110 805 547 A discloses a piezoelectric actuating fluid pump integrated on a PCB. The pump shall be used in the field of microfluid systems or devices such as chip cooling systems and chip laboratories due to their small size.

Document US 2013/000759 A1 discloses a microfluid device with external piezoelectric actuator for providing higher pressures than membrane pumps. The device pumps only a very small amount of fluid, wherein each pump stroke is typically in the order of about 20 nanoliters.

Document US 2019/0101220 A1 discloses a miniature fluid system that is produced in an integrated process. The system is usable as micro pump, micro atomizers, for print heads or industrial printers.

Document WO 01/00132 A2 discloses a seat support and massage system with air cells. The air supply is done in a conventional way with a motor driven pump and a separate manifold controlled by a controller. The used valves can be piezoelectric valves. However, there is still a need to further improve automotive comfort systems comprising air bladders.

### 3. Summary of the invention

The above-mentioned problem is solved by an integrated pump valve unit according to claim 1 and by a comfort system for a vehicle seat according to claim 13.

Particularly, the above mentioned problem is solved by an integrated pump valve unit comprising a piezoelectrically actuated air pump portion, comprising at least one pump air chamber and at least one pump piezoelectric element for actuating the pump portion, a piezoelectrically actuated air valve portion, comprising a valve air chamber and at least one valve piezoelectric element for controlling the opening and closing of an air flow through the valve portion, wherein the valve portion is in fluid connection with the pump portion, and wherein the pump portion and the valve portion form a structural unit.

The integrated pump valve unit provides an integration of all mechanical components for filling, holding the pressure and releasing of air to and from an air bladder of an automotive comfort system within one integrated unit. This integration into a structural unit saves additional parts and mounting effort. Further, the integrated pump valve unit due to the integration requires less space than conventional solutions.

Since both the air pump portion and the air valve portion are each piezoelectrically actuated by their respective piezoelectric elements, large and costly mechanical parts, like solenoids and motors can be saved as well. This particularly decreases the overall weight compared to standard pumps and valves and further decreases costs and space consumption. Further, the air pump portion and the air valve portion can be actuated by a common control electronics, since the actuation by piezoelectric elements requires comparable actuation voltages and currents. This reduces effort for the actuation electronics as well as mounting and wiring effort.

Preferably, the valve portion is in a closed state, when no voltage is applied to the valve piezoelectric element.

As structural unit could it be implemented with two different elements: One element comprising the air pump portion and the other element comprising the air valve unit attached together and being in fluid connection between.

Preferably, the pump portion and the valve portion are mechanically connected to each other by connection elements. The mechanical connection between these elements could be made by a bracket, snap hooks, male-female connections, mounting means like screws, rivets, etc. or gluing, welding etc. that attach together both elements such that they from a structural unit. Preferably, the elements are directly connected to each other such that they abut each other or are distanced from each other only by a minimal distance. A minimal distance between the two elements may less than 20 mm or preferably less than 10 mm.

Preferably, the connection elements are also establishing the fluid connection between the pump portion and the valve portion. For example, the connection between the air pump portion and the air valve portion could be made through a rigid hose that mechanically attaches together both elements and simultaneously provides a fluid connection between these elements.

Preferably, the integrated pump valve unit, further comprises a common housing of the pump portion and the valve portion, wherein the common housing constitutes at least a wall of the at least one pump air chamber and at least a wall of a valve air chamber. The structural unit can be provided by providing a common housing for the pump unit and the valve unit. This provides a very compact arrangement of the integrated pump valve unit and minimizes assembly costs. The common housing may comprise injection molded parts, assembled together, as required due to the need for providing a hollow pump air chamber and a hollow valve air chamber.

Preferably, the pump piezoelectric element actuates a pump membrane of the pump portion or the pump piezoelectric element constitutes a pump piezoelectric membrane of the pump portion.

In one alternative the pump portion comprises a movable membrane that is actuated by a pump piezoelectric element. The movements of the piezoelectric element are transferred to pumping movements of the membrane. As an alternative to a membrane a piston or any other movable air propelling element may be used. However, a membrane requires less mechanical effort and no seals between moving elements as it moves in itself and simultaneously seals the pump air chamber.

In a further alternative the pump piezoelectric element constitutes a pump piezoelectric membrane. This pump piezoelectric membrane integrates the function of the membrane with the piezoelectric actuation in one single element. The pump piezoelectric membrane is part of the pump air chamber and is arranged to compress air if a corresponding electrical voltage is applied. Thus, no additional air membrane or air piston or the like are necessary in the pump portion, what makes the integrated pump valve unit very reliable and robust.

The pump portion comprises a first pump air chamber and a second pump air chamber that are both actuated by the at least one pump piezoelectric element. By two air chambers the pump power of the pump portion is doubled, which provides for a faster adjustment of the comfort system.

The first pump air chamber and the second pump air chamber are separated by the pump piezoelectric membrane. The single pump piezoelectric membrane commonly actuates two pump air chambers and pumps air in both movement directions. This minimizes the components of the pump portion and doubles the pumping power of the pump piezoelectric element.

Preferably, the pump piezoelectric membrane has a circular shape. A circular shaped pump piezoelectric membrane provides for an increased piezoelectric movement that corresponds to an increased stroke of the pump portion.

Preferably, air flows coming from the first pump air chamber and from the second pump air chamber are united within the integrated pump valve unit. This further decreases the overall space and weight of the integrated pump valve unit and eliminates any external hoses to combine the air flows of the double acting piezoelectric pump portion having two air chambers.

Preferably, the housing may comprise an air connection channel connecting the air flows from the first pump air chamber and from the second pump air chamber prior to entering into the valve air chamber.

Preferably, the valve piezoelectric element actuates a movable valve membrane, that directly opens and closes an exhaust outlet or the valve piezoelectric element constitutes a movable valve piezoelectric membrane, that directly opens and closes the exhaust outlet. A piezoelectric element for controlling a valve is more reliable and structurally less complicated than a solenoid for controlling a valve.

In one alternative the exhaust outlet of the valve portion is opened and closed by a movable valve membrane. The valve membrane is moved by a piezoelectric element when electrical power is applied to the piezoelectric element.

In another embodiment the exhaust outlet of the valve portion is directly opened and closed by a movable valve piezoelectric membrane. This movable valve piezoelectric membrane moves when electrical power is applied to it. The valve piezoelectric membrane integrated the function of a membrane and the piezoelectric actuation thereof in a single element. This provides a very reliable and structurally easy construction of the piezoelectrically actuated valve.

Preferably, the valve piezoelectric membrane comprises an air opening for allowing an air flow from one side of the valve piezoelectric membrane to the other side of the valve piezoelectric membrane. The air opening allows the piezoelectrically actuated valve to be supplied with air from two sides of the valve piezoelectric membrane.

Preferably, the valve piezoelectric membrane may be designed such that it does not cover completely the diameter of the valve air chamber. Thus, it acts as the active element to close and open the valve portion but does not separate the valve air chamber into to isolated air chambers.

Preferably, the valve piezoelectric membrane has a circular shape. A circular shaped valve piezoelectric membrane provides for an increased piezoelectric movement that corresponds to an increased opening and closing movement of the valve. This increases the possible throughput through the valve in open state.

Preferably, the integrated pump valve unit further comprises a valve seal arranged within the valve air chamber and surrounding the exhaust outlet. Such a seal cooperates directly with a face of the valve membrane or a face of the valve piezoelectric membrane, which reduces the number of parts of the valve portion.

Preferably, the integrated pump valve unit further comprises at least one air inlet check valve, for allowing an air flow into the at least one pump air chamber and for blocking an air flow out of the at least one pump air chamber; and/or at least one air outlet check valve, for allowing an air flow out of the at least one pump air chamber and for blocking an air flow from the valve chamber into the at least one pump air chamber.

Preferably, the integrated pump valve unit further comprises at least one air channel fluidly connecting the at least one pump air chamber with the valve air chamber.

Preferably, the at least one air channel comprises outer walls of the common housing. The use of outer walls of the housing for forming an air channel on the one hand reduces the complexity for forming the common housing and allows for integrating an air outlet check valve into the air path from the pump portion to the valve portion.

Preferably, the at least one air channel comprises at least one cover, attached to the common housing. The use of a separate cover as part of an air channel allows an easy assembly the air outlet check valve within the air path between pump portion and valve portion. The air outlet check valve is easily accessible when the cover is not mounted, yet. Further, such an arrangement is particularly favorable, since the common housing and the cover can be made separately, preferably of a plastic material, by injection molding.

Preferably, the pump portion comprises a general shape of a flat disc and the valve portion comprises a general shape of a flat disc, wherein the common housing is provided such that the pump portion and the valve portion are arranged in the same disc orientation and side-by-side. Such a design and arrangement of pump portion with respect to the valve portion provides a very flat pump valve unit that can easily be integrated into a backrest or seat cushion of a vehicle seat.

The above-mentioned problem is also solved by a comfort system for a vehicle seat, comprising at least one air bladder fluidly connected to at least one integrated pump valve unit as described above.

### 4. Short description of the drawings

In the following, preferred embodiments of the invention are disclosed by reference to the accompanying figures, in which shows:
- Fig. 1a to 1c:: schematic side sectional views of a preferred embodiment of an integrated pump valve unit in different states of operation;
- Fig. 2:: a top view of the embodiment of the integrated pump valve unit of Fig. 1; and
- Fig. 3:: a schematic side view of a vehicle seat with an air comfort system having an integrated pump valve unit.

### 5. Description of preferred embodiments

In the following preferred embodiments of the invention are described with respect to the figures.

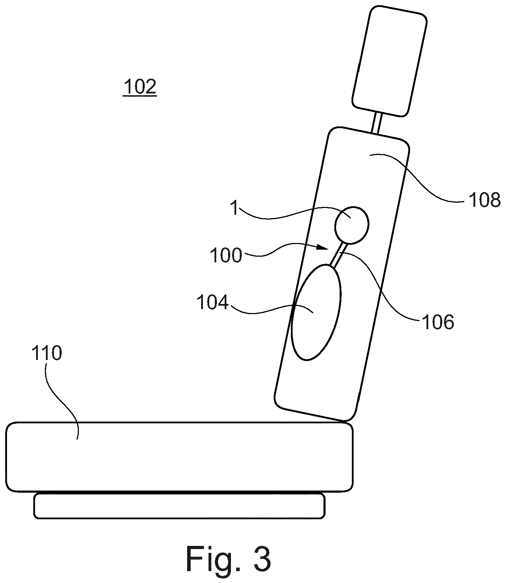

As shown in Fig. 3 an integrated pump valve unit 1 is part of a comfort system 100 arranged within the backrest 108 or a seat cushion 110 of an automotive seat 102. Preferably, the integrated pump valve unit 1 is connected to an air bladder 104 of the comfort system 100 via an air conduit 106 and provides for a controlled inflation and deflation of the air bladder 104. The integrated pump valve unit 1 has the following functionality: The air pump unit 10 takes in air from the ambient, compresses it to some extend and provides this compressed air to the air valve portion 30. The air valve portion 30 preferably provides the compressed air to an air bladder 104 via the air conduct 106 and is able to release the air in a controlled manner from the air bladder 104 to the ambient.

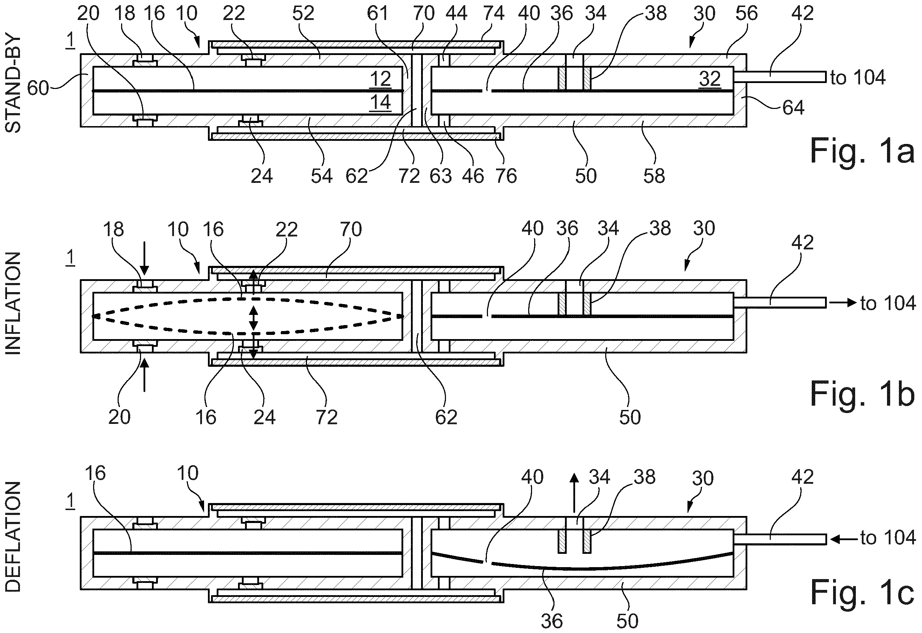

Figs. 1a to 1c show a schematic side sectional view of the integrated pump valve unit 1. The pump valve unit 1 comprises a piezoelectrically actuated air pump portion 10 and a piezoelectrically actuated air valve portion 30 that are fluidly connected to each other. The air pump portion 10 and the air valve portion 30 have a common housing 50 that integrates the two functional components 10, 30 into one single integrated unit **1**.

Fig. 1a shows the integrated pump valve unit 1 in a stand-by condition in which the air pump portion 10 does not pump air (off state) and the air valve portion 30 does not release air into the ambient (closed state). In this stand-by condition the air pressure and/or volume in an air bladder 104 is kept constant.

Fig. 1b shows the integrated pump valve unit 1 in an inflation condition in which the air pump portion 10 pumps air (on state) to the valve portion 30 and further to the air bladder 104 for inflation. The air valve portion 30 does not release air into the ambient (closed state). In this stand-by condition the air pressure and/or volume in the air bladder 104 is increased.

Fig. 1c shows the integrated pump valve unit 1 in a deflation condition in which the air pump portion 10 does not pump air (off state) and the valve portion 30 releases air into the ambient (open state). In this deflation condition the air pressure and/or volume in the air bladder 104 is decreased.

In the shown embodiment the pump portion 10 comprises a piezoelectric element in the form of a pump piezoelectric membrane 16, that actuates the pump portion 10, a first pump air chamber 12 above the pump piezoelectric membrane 16 and a second pump air chamber 14 below the pump piezoelectric membrane 16. The pump piezoelectric membrane 16 is preferably a thin circular disc that is able to reciprocally deform or swing in two directions if a corresponding actuation voltage is applied to it (see Fig. 1b). By this movement reciprocally an overpressure and an underpressure is generated in each of the two pump air chambers 12, 14. The pump piezoelectric membrane 16 is mounted by its periphery to side walls 60 of the air chambers 12, 14.

As an alternative (not shown), an elastic pump membrane can be provided instead of the pump piezoelectric membrane 16, wherein the elastic pump membrane is moved by a separate piezoelectric element.

The first pump air chamber 12 comprises a first air inlet check valve 18 arranged within the upper pump wall 52 of the housing 50. The first air inlet check valve 18 allows an air flow into the first pump air chamber 12 and blocks an air flow out of the first pump air chamber 12.

Similarly, the second pump air chamber 14 preferably may comprise a second air inlet check valve 20 that allows an air flow into the second pump air chamber 14 and blocks an air flow out of the second pump air chamber 14. The second air inlet check valve 20 may be arranged within the lower pump wall 54 of the housing 50.

Thus, when the pump piezoelectric membrane 16 is moving downwards by application of an electric voltage to it, an underpressure is generated in the first pump air chamber 12, the first air inlet check valve 18 opens and air from the ambient is sucked into the first pump air chamber 12. Simultaneously, when the pump piezoelectric membrane 16 is moving downwards, air within the second air chamber 14 is compressed and the second air inlet check valve 20 is closed. The compressed air is forced into a second air channel 72 that connects the second pump air chamber 14 with the valve air chamber 32.

When the pump piezoelectric membrane 16 is moving upwards by application of an electric voltage to it an overpressure is generated in the first pump air chamber 12, the first air inlet check valve 18 is closed and the compressed air is forced into a first air channel 70 that connects the first pump air chamber 12 with the valve air chamber 32. Simultaneously, when the pump piezoelectric membrane 16 is moving upwards, within the second air chamber 14 an underpressure is generated in the second pump air chamber 14, the second air inlet check valve 20 opens and air from the ambient is sucked into the second pump air chamber 14.

Thus, by the reciprocal movement of the pump piezoelectric membrane 16 the pump portion 10 generates compressed air that is supplied to the valve portion 30 via the first air channel 70 and the second air channel 72. The first air channel 70 may be constituted by upper outer walls 52 and 56 of the common housing 50 and by a first cover 74, attached to the common housing 50. The first air channel 70 fluidly connects the first pump air chamber 12 with the valve air chamber 32 via an opening 44. The opening 44 may be in the upper outer wall 56. Similarly, the second air channel 72 may be constituted by lower outer walls 54 and 58 of the common housing 50 and by a second cover 76, attached to the common housing 50. The second air channel 72 fluidly connects the second pump air chamber 14 with the valve air chamber 32, via an air connection channel 62 in the housing 50 connecting the second air channel 72 with the first air channel 70. Alternatively, the second air channel 72 can lead to an opening 46. The opening may be in the lower outer wall 58 of the valve portion 30 and into the valve air chamber 32.

The valve portion 30 comprises a valve piezoelectric element 36 for controlled opening and closing an air flow through the valve portion 30. The valve piezoelectric element 36 is preferably in form of a movable valve piezoelectric membrane 36 that directly opens and closes an exhaust outlet 34 that leads to the ambient. The valve piezoelectric membrane 36 preferably has a circular shape and is connected to side walls 63, 64 of the valve air chamber 32 at the periphery of the valve piezoelectric membrane 36. If an appropriate voltage is applied to the valve piezoelectric membrane 36 it bends or deforms to the open state of the valve portion 30 as shown in Fig. 1c. If no voltage is applied to the valve piezoelectric membrane 36 it is substantially flat as shown in Fig. 1b and the valve portion 30 is in the closed state.

As an alternative (not shown), an elastic valve membrane may be provided instead of the valve piezoelectric membrane 36, wherein the elastic valve membrane is actuated by a separate valve piezoelectric element.

The exhaust outlet 34 is preferably arranged near the center of the outer wall 56 of the housing 50. A valve seal 38 of an elastomeric material may be arranged within the valve air chamber 32 surrounding the exhaust outlet 34 for improving the airtightness of the valve portion 38 in closed state. The valve piezoelectric membrane 36 directly contacts the valve seal 38 and closes the valve portion 30 without a voltage applied. Thereby, the exhaust outlet 38 is closed and the air within the valve air chamber 32 cannot flow to the ambient.

The valve piezoelectric membrane 36 may not separate the valve air chamber 32 into two isolated chambers. Preferably, it may comprise an air opening 40 for allowing an air flow from one side of the valve piezoelectric membrane 36 to the other side of the valve piezoelectric membrane 36. This is particularly useful, if the pump portion 10 is a double acting pump that provides air to the valve air chamber 32 at both sides of the valve piezoelectric membrane 36. If the valve piezoelectric membrane 36 comprises an air opening 40 the air connection channel 62 connecting the first and second air channels 70, 72 can be saved, what further may decrease the space of the integrated pump valve unit 1.

The integrated pump valve unit 1 further comprises an air outlet 42 that is connected to the bladder 104 via the air conduit 106. Since the valve portion 30 leads through the air coming from the pump portion 10 to the air bladder 104 during filling the air bladder 104 only one single air outlet 42 at the valve portion 30 is needed for connecting the integrated pump valve unit 1 with the air bladder 104. Via this single air outlet 42 the filling and the releasing of air of the air bladder 104 can be done.

Further, the integrated pump valve unit 1 preferably comprise one or more outlet check valves 22, 24 that allow an air flow out of the at pump air chambers 12, 14 into the valve chamber 32 but block an air flow in the reverse direction. The first and second outlet check valves 22, 24 can be arranged as shown in Fig. 1a to 1c in the upper and lower outer walls 52, 54 of the pump portion 10 leading into the air channels 70, 72. This position allows for an easy installation of the first and second outlet check valves 22, 24 prior to closing the air channels 70, 72 by the covers 74, 76. Alternatively, the first and second outlet check valves 22, 24 could also be arranged within the air channels 70, 72 or at the openings 44, 46 of the valve portion outer walls 56, 58.

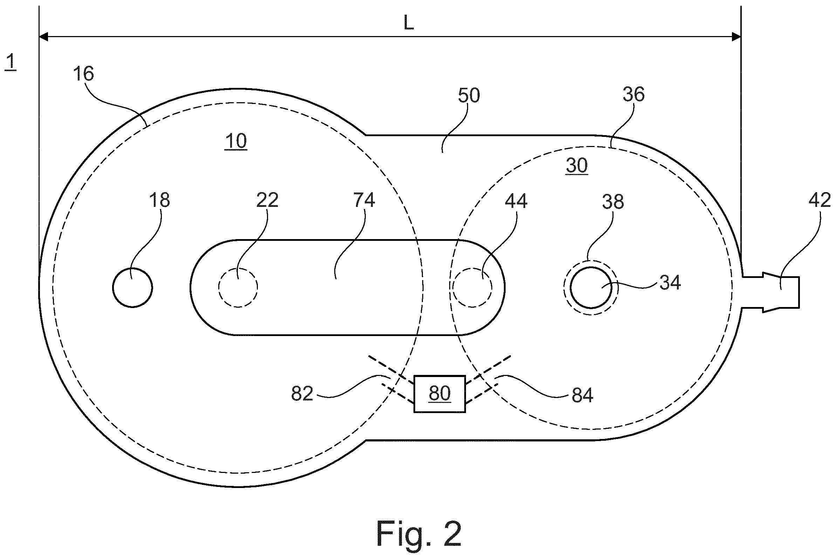

As shown in Figs. 1 and 2 the integrated pump valve unit 1 comprises a very thin and compact shape, wherein the pump portion 10 comprises a general shape of a flat disc and the valve portion 30 also comprises a general shape of a flat disc and both portions are integral due to the common housing 50 or may be attached one to the other. The diameter of the valve portion 30 may be smaller than the diameter of the pump portion 10 since the valve piezoelectric membrane 36 may be smaller than the pump piezoelectric membrane 16. This is because the diameter of the pump piezoelectric membrane 16 determines the air power provided by the pump unit 10, whereas the diameter of the valve piezoelectric membrane 36 is determined by the opening stroke thereof for providing the necessary throughput of air out of the exhaust outlet 34.

As shown in Fig. 2, the common housing 50 is provided such that the pump portion 10 and the valve portion 30 are arranged in the same disc orientation and side-by-side. This provides a very thin (see Fig.1) and compact integrated pump valve unit 1 that can easily be installed with a vehicle seat 102. The longest length L of the housing 50 can preferably be below 70 mm, preferably below 60 mm and preferably is 54 mm. The thickness of the integrated pump valve unit 1 can preferably be below 20 mm, preferably below 15 mm and preferably is 11 mm.

The electrical actuation of the pump piezoelectric membrane 16 and/or the valve piezoelectric membrane 36 is done by flexible electric wires 82, 84 that connect the piezoelectric membranes 16 and 36 with an electrical connector 80 or with a control electronics (not shown) within the integrated pump valve unit 1.

### List of reference signs:

- 1: integrated pump valve unit
- 10: piezoelectrically actuated air pump portion
- 12: first pump air chamber
- 14: second pump air chamber
- 16: pump piezoelectric element, pump piezoelectric membrane
- 18, 20: first air inlet check valve
- 20: second air inlet check valve
- 22: first air outlet check valve
- 24: second air outlet check valve
- 30: piezoelectrically actuated air valve portion
- 32: valve air chamber
- 34: exhaust outlet
- 36: valve piezoelectric element, valve piezoelectric membrane
- 38: seal
- 40: air opening
- 42: air outlet
- 50: common housing
- 52: upper outer wall of pump air chamber
- 54: lower outer wall of pump air chamber
- 56: upper outer wall of valve air chamber
- 58: lower outer wall of valve air chamber
- 60: side wall of pump air chamber
- 62: air connection channel
- 64: side wall of valve air chamber
- 70: first air channel
- 72: second air channel
- 74: first cover of air channel
- 76: second cover of air channel
- 100: comfort system
- 102: vehicle seat
- 104: air bladder
- 106: air conduit
- 108: backrest
- 110: seat cushion

## Claims

1. Integrated pump valve unit (1) for providing compressed air to an air bladder of an automotive comfort system within an automotive seat, the integrated pump valve unit (1) comprising:
a. a piezoelectrically actuated air pump portion (10), comprising at least one pump air chamber (12, 14) and at least one pump piezoelectric element (16) for actuating the pump portion (10);
b. a piezoelectrically actuated air valve portion (30), comprising a valve air chamber (32) and at least one valve piezoelectric element (36) for controlling the opening and closing of an air flow through the valve portion (30), wherein the valve portion (30) is in fluid connection with the pump portion (10); and wherein
c. the pump portion (10) and the valve portion (30) form a structural unit;
**characterized in that**
d. the pump portion (10) comprises a first pump air chamber (12) and a second pump air chamber (14) that are both actuated by the at least one pump piezoelectric element (16) in form of a pump piezoelectric membrane (16) that separates the first pump air chamber (12) and the second pump air chamber (14).

2. Integrated pump valve unit according to claim 1, wherein the pump portion (10) and the valve portion (30) are mechanically connected to each other by connection elements.

3. Integrated pump valve unit according to claim 1, further comprising a common housing (50) of the pump portion (10) and the valve portion (30), wherein the common housing (50) constitutes at least a wall (52, 54) of the at least one pump air chamber (12, 14) and at least a wall (56, 58) of a valve air chamber (32).

4. Integrated pump valve unit according to one of the claims 1 to 3, wherein:
a. the pump piezoelectric element (16) actuates a pump membrane of the pump portion (10); or
b. the pump piezoelectric element (16) constitutes a pump piezoelectric membrane (16) of the pump portion (10).

5. Integrated pump valve unit according to claim 1, wherein air flows coming from the first pump air chamber (12) and from the second pump air chamber (14) are united within the integrated pump valve unit (1).

6. Integrated pump valve unit according to one of the claims 1 to 5, wherein
a. the valve piezoelectric element (36) actuates a movable valve membrane, that directly opens and closes an exhaust outlet (34); or
b. the valve piezoelectric element (36) constitutes a movable valve piezoelectric membrane (36), that directly opens and closes the exhaust outlet (34).

7. Integrated pump valve unit according to claim 6, further comprising a valve seal (38) arranged within the valve air chamber (32) and surrounding the exhaust outlet (34).

8. Integrated pump valve unit according to one of the claims 1 to 7, further comprising:
a. at least one air inlet check valve (18, 20), for allowing an air flow into the at least one pump air chamber (12, 14) and for blocking an air flow out of the at least one pump air chamber (12,14); and/or
b. at least one air outlet check valve (22, 24), for allowing an air flow out of the at least one pump air chamber (12, 14) and for blocking an air flow from the valve chamber (32) into the at least one pump air chamber (12, 14).

9. Integrated pump valve unit according to one of the claims 1 to 8, further comprising at least one air channel (70, 72) fluidly connecting the at least one pump air chamber (12, 14) with the valve air chamber (32).

10. Integrated pump valve unit according to claims 3 and 9, wherein the at least one air channel (72, 72) comprises outer walls (52, 54, 56, 58) of the common housing (50).

11. Integrated pump valve unit according to claim 10, and wherein the at least one air channel (72, 72) comprises at least one cover (74, 76), attached to the common housing (50).

12. Integrated pump valve unit according to one of the claims 1 to 11, wherein the pump portion (10) comprises a general shape of a flat disc and the valve portion (30) comprises a general shape of a flat disc, wherein the common housing (50) is provided such that the pump portion (10) and the valve portion (30) are arranged in the same disc orientation and side-by-side.

13. Comfort system (100) for a vehicle seat (102), comprising at least one air bladder (104) fluidly connected to at least one integrated pump valve unit (1) according to one of the claims 1 to 12.

## Patentansprüche

1. Integrierte Pumpenventileinheit (1) zum Bereitstellen von Druckluft an eine Luftblase eines Kraftfahrzeugkomfortsystems innerhalb eines Kraftfahrzeugsitzes, die integrierte Pumpenventileinheit (1) umfassend:
a. einen piezoelektrisch betätigten Luftpumpenabschnitt (10), umfassend mindestens eine Pumpenluftkammer (12, 14) und mindestens ein piezoelektrisches Pumpenelement (16) zum Betätigen des Pumpenabschnitts (10);
b. einen piezoelektrisch betätigten Luftventilabschnitt (30), umfassend eine Ventilluftkammer (32) und mindestens ein piezoelektrisches Ventilelement (36) zum Steuern des Öffnens und Schließens eines Luftstroms durch den Ventilabschnitt (30), wobei der Ventilabschnitt (30) in Fluidverbindung mit dem Pumpenabschnitt (10) steht; und wobei
c. der Pumpenabschnitt (10) und der Ventilabschnitt (30) eine strukturelle Einheit bilden; **dadurch gekennzeichnet, dass**
d. der Pumpenabschnitt (10) eine erste Pumpenluftkammer (12) und eine zweite Pumpenluftkammer (14) umfasst, die beide durch das mindestens eine piezoelektrische Pumpenelement (16) in Form einer piezoelektrischen Pumpenmembran (16) betätigt werden, die die erste Pumpenluftkammer (12) und die zweite Pumpenluftkammer (14) trennt.

2. Integrierte Pumpenventileinheit nach Anspruch 1, wobei der Pumpenabschnitt (10) und der Ventilabschnitt (30) durch Verbindungselemente mechanisch miteinander verbunden sind.

3. Integrierte Pumpenventileinheit nach Anspruch 1, ferner umfassend ein gemeinsames Gehäuse (50) des Pumpenabschnitts (10) und des Ventilabschnitts (30), wobei das gemeinsame Gehäuse (50) mindestens eine Wand (52, 54) der mindestens einen Pumpenluftkammer (12, 14) und mindestens eine Wand (56, 58) einer Ventilluftkammer (32) bildet.

4. Integrierte Pumpenventileinheit nach einem der Ansprüche 1 bis 3, wobei:
a. das piezoelektrische Pumpenelement (16) eine Pumpenmembran des Pumpenabschnitts (10) betätigt; oder
b. das piezoelektrische Pumpenelement (16) eine piezoelektrische Pumpenmembran (16) des Pumpenabschnitts (10) bildet.

5. Integrierte Pumpenventileinheit nach Anspruch 1, wobei Luftströme, die von der ersten Pumpenluftkammer (12) und von der zweiten Pumpenluftkammer (14) kommen, innerhalb der integrierten Pumpenventileinheit (1) vereinigt werden.

6. Integrierte Pumpenventileinheit nach einem der Ansprüche 1 bis 5, wobei
a. das piezoelektrische Ventilelement (36) eine bewegliche Ventilmembran betätigt, die einen Abgasauslass (34) direkt öffnet und schließt; oder
b. das piezoelektrische Ventilelement (36) eine bewegliche piezoelektrische Ventilmembran (36) bildet, die den Abgasauslass (34) direkt öffnet und schließt.

7. Integrierte Pumpenventileinheit nach Anspruch 6, ferner umfassend eine Ventildichtung (38), die innerhalb der Ventilluftkammer (32) angeordnet ist und den Abgasauslass (34) umgibt.

8. Integrierte Pumpenventileinheit nach einem der Ansprüche 1 bis 7, ferner umfassend:
a. mindestens ein Lufteinlassrückschlagventil (18, 20), um einen Luftstrom in die mindestens eine Pumpenluftkammer (12, 14) zu ermöglichen und um einen Luftstrom aus der mindestens einen Pumpenluftkammer (12, 14) zu blockieren; und/oder
b. mindestens ein Luftauslassrückschlagventil (22, 24), um einen Luftstrom aus der mindestens einen Pumpenluftkammer (12, 14) zu ermöglichen und um einen Luftstrom aus der Ventilkammer (32) in die mindestens eine Pumpenluftkammer (12, 14) zu blockieren.

9. Integrierte Pumpenventileinheit nach einem der Ansprüche 1 bis 8, ferner umfassend mindestens einen Luftkanal (70, 72), der die mindestens eine Pumpenluftkammer (12, 14) mit der Ventilluftkammer (32) fluidisch verbindet.

10. Integrierte Pumpenventileinheit nach den Ansprüchen 3 und 9, wobei der mindestens eine Luftkanal (72, 72) Außenwände (52, 54, 56, 58) des gemeinsamen Gehäuses (50) umfasst.

11. Integrierte Pumpenventileinheit nach Anspruch 10, und wobei der mindestens eine Luftkanal (72, 72) mindestens eine Abdeckung (74, 76) umfasst, die an dem gemeinsamen Gehäuse (50) angebracht ist.

12. Integrierte Pumpenventileinheit nach einem der Ansprüche 1 bis 11, wobei der Pumpenabschnitt (10) eine allgemeine Form einer flachen Scheibe umfasst und der Ventilabschnitt (30) eine allgemeine Form einer flachen Scheibe umfasst, wobei das gemeinsame Gehäuse (50) derart bereitgestellt ist, dass der Pumpenabschnitt (10) und der Ventilabschnitt (30) in derselben Scheibenausrichtung und Seite an Seite angeordnet sind.

13. Komfortsystem (100) für einen Fahrzeugsitz (102), umfassend mindestens eine Luftblase (104), die mit mindestens einer integrierten Pumpenventileinheit (1) nach einem der Ansprüche 1 bis 12 fluidisch verbunden ist.

## Revendications

1. Unité intégrée de soupape de pompe (1) pour délivrer de l'air comprimé à une vessie d'air d'un système de confort de conduite automobile au sein d'un siège automobile, l'Unité intégrée de soupape de pompe (1) comprenant :
a. une partie de pompe à air à actionnement piézoélectrique (10), comprenant au moins une chambre de pompe à air (12, 14) et au moins un élément piézoélectrique de pompe (16) pour l'actionnement de la partie de pompe (10) ;
b. une partie de soupape d'air à actionnement piézoélectrique (30), comprenant une chambre de soupape d'air (32) et au moins un élément piézoélectrique de soupape (36) pour contrôler l'ouverture et la fermeture d'un flux d'air au travers de la partie de soupape (30), la partie de soupape (30) étant en liaison de fluide avec la partie de pompe (10) ; et dans laquelle
c. la partie de pompe (10) et la partie de soupape (30) forment une unité structurelle ;
**caractérisée en ce que**
d. la partie de pompe (10) comprend une première chambre de pompe à air (12) et une seconde chambre de pompe à air (14) qui sont toutes deux actionnées par l'au moins un élément piézoélectrique de pompe (16) sous la forme d'une membrane piézoélectrique de pompe (16) qui sépare la première chambre à air de pompe (12) et la seconde chambre à air de pompe (14).

2. Unité intégrée de soupape de pompe selon la revendication 1, dans laquelle la partie de pompe (10) et la partie de soupape (30) sont mécaniquement reliées l'une à l'autre par des éléments de liaison.

3. Unité intégrée de soupape de pompe selon la revendication 1, comprenant en outre un carter commun à la partie de pompe (10) et de la partie de soupape (30), le carter commun (50) constituant au moins une paroi (52, 54) de l'au moins une chambre à air de pompe (12, 14) et au moins une paroi (56, 58) d'une chambre à air de soupape (32).

4. Unité intégrée de soupape de pompe selon l'une des revendications 1 à 3, dans laquelle :
a. l'élément piézoélectrique de pompe (16) actionne une membrane de pompe de la partie de pompe (10) ; ou
b. l'élément piézoélectrique de pompe (16) constitue une membrane piézoélectrique de pompe (16) de la partie de pompe (10).

5. Unité intégrée de soupape de pompe selon la revendication 1, dans laquelle les flux d'air provenant de la première chambre à air de pompe (12) et de la seconde chambre à air de pompe (14) sont réunis au sein de l'unité intégrée de soupape de pompe (1).

6. Unité intégrée de soupape de pompe selon l'une des revendications 1 à 5, dans laquelle
a. l'élément piézoélectrique de soupape (36) actionne une membrane de soupape mobile qui ouvre et ferme directement une sortie d'échappement (34) ; ou
b. l'élément piézoélectrique de soupape (36) constitue une membrane piézoélectrique de soupape mobile (36), qui ouvre et ferme directement la sortie d'échappement (34).

7. Unité intégrée de soupape de pompe selon la revendication 6, comprenant en outre un joint de soupape (38) agencé à l'intérieur de la chambre à air de soupape (32) et entourant la sortie d'échappement (34).

8. Unité intégrée de soupape de pompe selon l'une des revendications 1 à 7, comprenant en outre :
a. au moins un clapet anti-retour d'entrée d'air (18, 20), pour permettre à un flux d'air d'entrer dans l'au moins une chambre à air de pompe (12, 14) et pour empêcher un flux d'air de sortir de l'au moins une chambre à air de pompe (12, 14) ; et/ou
b. au moins un clapet anti-retour de sortie d'air (22, 24), pour permettre à un flux d'air de sortir de l'au moins une chambre à air de pompe (12, 14) et pour empêcher un flux d'air provenant de la chambre à air de soupape (32) d'entrer dans l'au moins une chambre à air de pompe (12, 14).

9. Unité intégrée de soupape de pompe selon l'une des revendications 1 à 8, comprenant en outre au moins une conduite d'air (70, 72) reliant fluidiquement l'au moins une chambre à air de pompe (12, 14) à la chambre à air de soupape (32).

10. Unité intégrée de soupape de pompe selon les revendications 3 et 9, dans laquelle l'au moins une conduite d'air (70, 72) comprend des parois externes (52, 54, 56, 58) du carter commun (50).

11. Unité intégrée de soupape de pompe selon la revendication 10, dans laquelle l'au moins une conduite d'air (70, 72) comprend au moins un couvercle (74, 76) fixé au carter commun (50).

12. Unité intégrée de soupape de pompe selon l'une des revendications 1 à 11, dans laquelle la partie de pompe (10) présente une forme d'ensemble d'un disque plat et la partie de soupape (30) présente une forme d'ensemble d'un disque plat, le carter commun (50) étant disposé de telle manière que la partie de pompe (10) et la partie de soupape (30) soient agencées dans la même orientation de disque et côte à côte.

13. Système de confort de conduite (100) pour un siège de véhicule (102), comprenant au moins une vessie d'air (104) reliée fluidiquement à au moins une unité intégrée de soupape de pompe (1) selon l'une des revendications 1 à 12.
